# EUROPÄISCHE PATENTSCHRIFT

(11) **EP 1 094 048 B1**
(45) Veröffentlichungstag und Bekanntmachung des Hinweises auf die Patenterteilung: **31.03.2004**
(21) Anmeldenummer: 00122259.5
(22) Anmeldetag: 19.10.2000
(51) Int. Cl.: C05F 9/04, C05F 17/02, C05F 17/00

(54) **Verfahren und Vorrichtung zum Aufbereiten von Frischkompost**
Process and device for the treatment of composting matter
Procédé et appareil pour le traitement de matières à composter

(30) Priorität: 19.10.1999 DE 19950173
(43) Veröffentlichungstag der Anmeldung: 25.04.2001
(73) Patentinhaber: Knüsting, Ernst, Dr., 39599 Möringen (DE)
(72) Erfinder: Knüsting, Ernst, Dr., 39599 Möringen (DE); Knüsting, Gregor, 38268 Lengede (DE)
(74) Vertreter: Patentanwälte Rehberg + Hüppe

(56) Entgegenhaltungen:
- DE-A- 3 812 518
- DE-A- 3 841 168
- DE-A- 4 025 681
- US-A- 4 552 726
- US-A- 5 759 224

## Beschreibung

Die Erfindung betrifft ein Verfahren zum Aufbereiten von Frischkompost. Dazu werden Bodentiere zumindest einem ersten Teilbereich des Frischkomposts zugeführt. Die Bodentiere nehmen den Frischkompost auf und geben anschließend veredelten Kompost wieder ab, so daß sie den Frischkompost in einem Veredelungsbereich zumindest teilweise veredeln und dessen Eigenschaften verbessern. Ein zweiter Teilbereich des Frischkomposts oder zusätzlicher Frischkompost, der noch nicht von den Bodentieren durchsetzt ist, wird so bereitgestellt, daß daraus die Bewegungsrichtung der Bodentiere in Richtung dieses Fristkomposts resultiert. Die Erfindung betrifft weiterhin eine Vorrichtung zum Aufbereiten von Frischkompost nach dem oben beschriebenen Verfahren, die mindestens ein Fördermittel zum Bereitstellen von Frischkompost aufweist.

Unter Frischkompost wird vornehmlich solcher Kompost verstanden, der bereits einem Rotteprozeß unterzogen wurde. Bei dem Ausgangsmaterial des Frischkomposts handelt es sich beispielsweise um Bioabfällen, Grüngut, Mist, Gülle, Stroh o. dgl.. Der Frischkompost wird nach einem teilweisen oder vollständigen Rotteprozeß einer Veredelung durch Bodentiere zugeführt, welche organische Bestandteile in dem Frischkompost fressen, verdauen und anschließend ausscheiden. Der veredelte Kompost ist besonders hochwertig und besitzt einen hohen Nährstoffgehalt, so daß er insbesondere als Spezialsubstrat für die Aufforstung devastierter Ödlandböden, für den Landschaftsgartenbau und für die schnelle Wiederbesiedelung von Landflächen verwendbar ist.

Ein Verfahren und eine Vorrichtung zum Aufbereiten von Kompost durch Kompostwürmer ist aus der DE 38 12 518 A1 bekannt. Die Vorrichtung weist einen Behälter mit einem schachtförmigen, langgetreckten Aufnahmeraum für den Kompost auf. Der Aufnahmeraum ist zumindest teilweise mit Kompost befüllt. Der Aufnahmeraum weist einen Wurm-Beschickungsbereich, in dem die Kompostwürmer dem Kompost zugesetzt werden, und einen Wurm-Entnahmebereich, in dem die Kompostwürmer aus dem Aufnahmeraum entfernt werden, auf. Der Wurm-Entnahmebereich ist dabei höher als der Wurm-Beschickungsbereich angeordnet, wobei die beiden Bereiche selbst horizontal ausgerichtet und durch eine schiefe Ebene miteinander verbunden sind. Die Kompostwürmer fressen sich ausgehend von dem Wurm-Beschickungsbereich über die schiefe Ebene aufwärts durch den Kompost, und sie erreichen schließlich den ebenen Wurm-Entnahmebereich, der bodenseitig eine Entnahmeöffnung aufweist, die im Normalzustand der Vorrichtung geschlossen ist. Nach dem Eintreffen der Kompostwürmer in dem Wurm-Entnahmebereich wird die Entnahmeöffnung so geöffnet, daß die sich im Bereich der Entnahmeöffnung befindenden Kompostwürmer durch die Entnahmeöffnung frei nach unten in den Wurm-Beschickungsbereich einer zweiten Vorrichtung fallen. In dieser Weise ist es möglich, eine Mehrzahl von Vorrichtungen in Reihe und gegebenenfalls zu einem geschlossenen Kreislauf zu schalten. Der Kompost wird den Kompostwürmern demnach in der Form eines endlichen Strangs bereitgestellt, wobei sich die Kompostwürmer stets durch einen ersten endlichen Strang fressen, um dann in den Anfangsbereich eines zweiten endlichen Strangs umgesetzt zu werden. Um alle Kompostwürmer aus der ersten Vorrichtung zu entfernen und der zweiten Vorrichtung zuzuführen, müssen sich diese gleichzeitig in dem begrenzten Wurm-Entnahmebereich oberhalb der Entnahmeöffnung aufhalten. Es ergibt sich somit aufgrund der unterschiedlichen Fortbewegungsgeschwindigkeiten unterschiedlich großer bzw. unterschiedlich alter Kompostwürmer die Schwierigkeit, daß entweder nur die schnelleren Kompostwürmer aus der Vorrichtung entfernt werden oder aber die Kompostwürmer erst nach Eintreffen auch der langsameren Kompostwürmer in die nächste Vorrichtung umgesetzt werden können.

Ein Verfahren und eine Vorrichtung zum Aufbereiten organischer Abfälle ist aus der DE 38 02 011 C2 bekannt. Bei dem Verfahren zum Aufbereiten organischer Abfälle mit Hilfe von bodenbewohnenden Gliederwürmern zu Wurmhumus werden die noch keinem Rotteprozeß unterzogenen Abfälle direkt in einem Aufbereitungsbehälter in einem sich wiederholenden Prozeß in Zeitabständen in vertikaler Richtung von oben hin zu einer obersten Schicht aufgeschichtet. In der darunterliegenden Schicht befinden sich die Gliederwürmer, die sich von der unteren Schicht nach oben durch die organischen Abfälle durchfressen und somit die Abfälle veredeln. Hieraus resultiert eine vertikale Bewegungsrichtung der Gliederwürmer. Nachdem die Gliederwürmer die unterste bereits veredelte Schicht verlassen haben, wird diese abgetrennt und einer weiteren Verwertung zugeführt. Anschließend wird die die Würmer momentan enthaltende Schicht in vertikaler Richtung nach unten innerhalb des Aufbereitungsbehälters so abgesenkt, daß in dem Aufbereitungsbehälter oben Platz für eine neue oberste Schicht frischer organischer Abfälle geschaffen wird. Die zugeführten Abfallschichten weisen jeweils eine im Vergleich zum Querschnitt des Aufbereitungsbehälters geringe Höhe auf; so daß der Platzbedarf für das Verfahren in Bewegungsrichtung der Gliederwürmer relativ gering ist. Auch der Aufbereitungsbehälter an sich weist im Vergleich zu seiner Höhe (d. h. in Richtung seiner Erstreckung, in der die Schichten aufeinander abgelagert werden) einen relativ großen Querschnitt auf. Die Gliederwürmer müssen sich daher in einem Veredelungsbereich mit einer relativ kleinen Erstreckung in Bewegungsrichtung der Gliederwürmer aufhalten, damit eine sinnvolle Abtrennung der veredelten Abfälle von der Schicht erfolgen kann, in der sich die Würmer gerade befinden. Es ist daher notwendig, daß die in dem Aufbereitungsbehälter befindlichen Würmer nahezu identische Fortbewegungsgeschwindigkeiten besitzen, damit sie sich nicht über größere Bereiche der organischen Abfälle verteilen.

Ein Verfahren und eine Vorrichtung zum Kompostieren von organischen Abfällen sind auch aus der DE 38 41 168 A1 bekannt. Die organischen Abfälle werden in einer kreis- oder ovalartigen Form zu einer Wandermiete aufgehaldet. von einer Stelle der Wandermiete ausgehend werden entsprechend der Form der Wandermiete frische organische Abfälle so kontinuierlich zugeführt, daß an einer anderen Stelle der Wandermiete nach einem abgeschlossenen Rotteprozeß entlang der Kreisbahn oder der ovalen Bahn der fertige Frischkompost abgeführt werden kann. Die Wandermiete wird in vorgegebenen Zyklen im wesentlichen kontinuierlich umgesetzt. Eine veredelungszone für den Frischkompost unter Verwendung von Bodentieren o.dgl. ist nicht vorgesehen.

Eine Vorrichtung zum Kompostieren von organischen Abfällen ist ebenfalls aus der DE 40 25 681 C2 bekannt. Das organische Ausgangsmaterial wird in einer ersten äußeren Schüttung ausgelegt und in eine weiter innen liegende zweite Schüttung umgesetzt, wobei die Schüttungen als geschlossene Spiralwindungen ausgebildet sind. Von der letzten innersten Schüttung wird der fertige Frischkompost abgeführt. Eine veredelungszone unter Verwendung von Bodentieren ist nicht vorgesehen.

Der Erfindung liegt die Aufgabe zugrunde, ein Verfahren und eine Vorrichtung zum Aufbereiten von Frischkompost bereitzustellen, mit denen es möglich ist, Frischkompost in gut steuerbarer Weise kontinuierlich zu veredeln.

Erfindungsgemäß wird dies bei einem Verfahren zum Aufbereiten von Frischkompost durch die Schritte des Patentanspruchs 1 und bei einer Vorrichtung zum Aufbereiten von Frischkompost durch die Merkmale des Patentanspruchs 8 erreicht.

Bei dem neuen Verfahren werden Bodentiere in zumindest einen ersten Teilbereich des Frischkomposts zugeführt. Unter Frischkompost werden solche Abfälle verstanden, die organische Bestandteile enthalten und zumindest teilweise bereits einem Rotteprozeß unterzogen wurden. Die Bodentiere nehmen organische Bestandteile des Frischkomposts auf, unterziehen diese einem Verdauungsprozeß und scheiden Reststoffe verbesserter Eigenschaften wieder aus, so daß der Frischkompost durch die Bodentiere in einem veredelungsbereich veredelt wird. Die Veredelung beruht auf den Prinzipien der Zerkleinerung, Durchmischung, Verdauung, Verklebung und Kalibrierung des Frischkomposts durch die Bodentiere. Dadurch erfolgt ein Aufschluß des Frischkomposts in für eine Anwendung in der Pflanzendüngung verbesserter Form. Den Bodentieren wird ein zweiter Teilbereich des Frischkomposts oder zusätzlicher Frischkompost, der noch nicht von den Bodentieren durchsetzt ist, bereitgestellt. Die Bodentiere bewegen sich ihrem Freß- und Überlebensinstinkt entsprechend stets in Richtung dieses frischen Futtermaterials, woraus die Bewegungsrichtung der Bodentiere in Richtung des frisch zugeführten Frischkomposts resultiert. Der Frischkompost wird dabei in der Form eines endlosen Strangs bereitgestellt, so daß sich der Veredelungsbereich, in dem sich die Bodentiere aufhalten, in der Bewegungsrichtung der Bodentiere auf eine Erstreckung von mehr als zwei Meter ausdehnen und diese Erstreckung beibehalten kann. Es ist also wichtig, daß den Bodentieren in ihrer Bewegungsrichtung ein relativ großer Veredelungsbereich bereitgestellt wird. Dadurch ist gewährleistet, daß der Veredelungsprozeß niemals abbricht und kontinuierlich veredelter Frischkompost durch die Bodentiere hergestellt wird. Der Strang muß aber nicht im geometrischen Sinne endlos sein, es kommt lediglich darauf an, daß den Bodentieren der Frischkompost derart endlos zur Verfügung steht, daß ihre Fortbewegung niemals gestoppt wird.

Die relativ große Erstreckung des Veredelungsbereichs hat den Vorteil, daß Bodentiere unterschiedlicher Größen, Bewegungsgeschwindigkeiten und Freßeigenschaften gleichzeitig in dem Frischkompost eingesetzt werden können. Dabei wird in dem Veredelungsbereich durch die schnellsten Bodentiere die sogenannte Freßfront ausgebildet. Im mittleren Bereich des Veredelungsbereichs befinden sich dann die mittelschnellen Bodentiere, während sich die langsamsten Bodentiere in Bewegungsrichtung der Bodentiere im hinteren Bereich des Veredelungsbereichs aufhalten. In dieser Weise werden die unterschiedlichen Arten von Bodentieren optimal zur Veredelung des Frischkomposts eingesetzt. Beispielsweise verwerten die großen schnellen Bodentiere relativ große organische Bestandteile in dem Frischkompost, während die kleinen langsamen Bodentiere dann auch noch die letzten übriggebliebenen kleinen Bestandteile in dem Frischkompost veredeln. Der gesamte Veredelungsprozeß ist in dem Sinne flexibel, als daß den Bodentieren ein relativ großer maximaler Veredelungsbereich für eine ungehinderte Bewegung zur Verfügung steht. Es ist durchaus möglich, daß sich der tatsächliche Veredelungsbereich in der Bewegungsrichtung der Bodentiere auf mehrere Meter, beispielsweise etwa 3, 5, 10 oder mehr Meter ausdehnt.

Die Bodentiere bleiben also immer in dem Veredlungsbereich, sodaß ein geschlossenes System vorliegt. Dazu muß der Frischkompost relativ zu den Bodentieren bewegt werden, wenn der Veredlungsbereich nicht wandern soll. Dies geschieht durch entsprechende maschinelle Geräte, Förderbänder o. dgl., mit denen der Frischkompost bewegt und damit den Bodentieren endlos zur Verfügung gestellt wird. Andererseits ist es aber auch möglich, den Frischkompost in Form eines endlosen Stranges ruhend bereitzustellen und die Bodentiere und damit den Veredlungsbereich wandern zu lassen. Auch hierfür werden maschinelle Geräte eingesetzt, die ihrerseits bewegt werden. Es muß also neben den sich bewegenden Bodentieren in allen Fällen ein zweites bewegtes Element vorhanden sein, um das geschlossene System zu realisieren.

Der Frischkompost kann so bereitgestellt werden, daß die Bewegungsrichtung der Bodentiere im wesentlichen horizontal ist. Mit einer solchen Anordnung ist es möglich, den Frischkompost in Form einer bodennahen oder direkt auf dem Boden gelagerten Miete, beispielsweise einer trapez- oder dreiecksförmigen Miete, aufzuhalden. Die Bodentiere bewegen sich entsprechend der Bereitstellung des Futtermaterials durch die Miete in horizontaler Richtung in Richtung des zusätzlich bereitgestellten Frischkomposts. Es versteht sich, daß sich die Bodentiere nicht streng in horizontaler Richtung, sondern vielmehr in einer Art zickzackkurs durch den Frischkompost bewegen. Bewegungen der Bodentiere entgegen der Bereitstellungsrichtung des Frischkomposts sind jedoch vernachlässigbar klein, da der Freß- und Überlebensinstinkt der Bodentiere dafür sorgt, daß diese dem frischen Futter entgegen streben. Durch die horizontale Bewegungsrichtung der Bodentiere und die entsprechende Bereitstellung des Frischkomposts kann das Verfahren in einer Vorrichtung mit sehr geringer Bauhöhe quer zu der Bewegungsrichtung der Bodentiere durchgeführt werden. Es ist aber auch z.B. möglich, mehrere getrennte Ebenen von Frischkompost übereinander so anzuordnen, daß bei gleicher Grundfläche und vergrößerter Höhe ein höheres Volumen von Frischkompost in einer Anlage veredelt und somit ein größerer Durchsatz erzielt werden kann. Wenn die örtlichen Gegebenheiten es erfordern, ist es auch möglich, den Frischkompost so bereitzustellen, daß die Bewegungsrichtung der Bodentiere im wesentlichen vertikal ist. In diesem Fall würde der Frischkompost vorzugsweise von oben her zugeführt, so daß die Bewegungsrichtung der Bodentiere in vertikaler Richtung von unten nach oben verliefe. Der veredelte Kompost würde schließlich am unteren Ende abgeführt werden. Wichtig bei einer solchen Anordnung ist es, daß der Frischkompost in Form eines endlosen Strangs so bereitgestellt wird, daß sich der Veredelungsbereich in der Bewegungsrichtung der Bodentiere auf eine relativ große Erstreckung von mehr als zwei Metern ausdehnen und diese Erstreckung dauerhaft beibehalten kann. Ebenfalls sind Mischformen der beiden oben beschriebenen Anordnungen möglich, beispielsweise die Bereitstellung des Frischkomposts auf einer schiefen Ebene, einer spiralförmigen Rutsche o. dgl..

Die Position der Bodentiere in dem Frischkompost kann bestimmt und je nach Position der Bodentiere die Bereitstellungsgeschwindigkeit des Frischkomposts verändert werden. Abhängig von dem Ergebnis der Bestimmung der Position der Bodentiere kann dann die Bereitstellungsgeschwindigkeit des Frischkomposts bzw. die Fördergeschwindigkeit der den Frischkompost bereitstellenden Fördermittel so vergrößert oder verkleinert werden, daß sich der veredelungsbereich mit den darin enthaltenen Bodentieren stets innerhalb des gewünschten Bereichs des Frischkomposts befindet. Ziel ist es dabei zu verhindern, daß die Bodentiere in einen Bereich gelangen, in dem sie nicht ausreichend mit Frischkompost versorgt werden.

Bei den Bodentieren kann es sich um Würmer, Regenwürmer, Springschwänze oder Asseln handeln. Als Regenwürmern kommen beispielsweise Eisenia foetida, Dendrobaena sp., Eudrilus sp., Lumbricus rubellus in Frage. Bei den Springschwänzen handelt es sich beispielsweise um Folsomia sp.. Die Art der Bodentiere ist letztendlich in Abhängigkeit von der Art des Frischkomposts und den klimatischen Bedingungen zu wählen. So bieten sich europäische Regenwürmer für eine Verwendung im üblichen europäischen Klima an, während Asseln auch bei höheren Temperaturen und somit beispielsweise auch in afrikanischen Ländern Anwendung finden können. Eisenia foetida bevorzugt z.B. einen Temperaturbereich von 15 bis 25°C und toleriert einen Temperaturbereich von 12 bis 30°C. Bevorzugt ist ein Feuchtegehalt von 80 bis 90 %, während ein Feuchtegehalt von 60 bis 90 % toleriert wird. Der pH-wert sollte zwischen 5 und 9 liegen. Die Wanderungsgeschwindigkeit eines einzelnen Bodentieres der Spezies Eisenia foetida, das nicht durch andere Bodentiere beeinflußt wird und optimale Freßbedingungen vorfindet, liegt bei etwa 10 bis 30 cm in 24 Stunden. Dabei nimmt Eisenia foetida etwa 0,8 bis 1 g Nahrung pro Tag zu sich. Es liegen aerobe Verhältnisse vor. Der Ammoniumgehalt liegt unterhalb von 0,5 mg/g Abfall bezogen auf das Frischgewicht. Für die Durcharbeitung von 500 m³ Frischkompost werden bei Annahme eines Verweilzeitraums von ca. 10 bis 30 Tagen in dem Veredelungsbereich ca. 230.000 adulte Eisenia foetida benötigt.

Der Frischkompost kann an einem Ende einer Wandermiete bereitgestellt werden, die in der Form mindestens einer Kreisbahn oder mindestens einer ovalen Bahn aufgebaut ist, und der veredelte Kompost kann an dem anderen Ende abgeführt werden. In dieser Weise kann bei geringen Platzbedarf besonders gut gewährleistet werden, daß die Bodentiere stets ausreichend und kontinuierlich mit Frischkompost versorgt werden. Es ist besonders wichtig, daß die Bodentiere immer ausreichend mit Frischkompost versorgt werden, da ansonsten ein Absterben der Bodentiere zu befürchten ist. Bei einem kreisförmigen oder ovalen Aufbau der Wandermiete bewegen sich die Bodentiere in Richtung des Bereitstellungsorts des Frischkomposts endlos um die Kreisbahn oder die ovale Bahn herum. Dies bedeutet, daß der Veredelungsbereich, der sich über einen gewissen Bereich des Frischkomposts erstreckt, stets in einer Richtung durch die Wandermiete bewegt. Die Bodentiere erreichen dabei jedoch niemals eines der Enden der nicht ganz geschlossenen umlaufenden Wandermiete, da stets der veredelte Kompost an dem einen Ende der Wandermiete abgezogen und dafür Frischkompost an dem anderen Ende der Wandermiete zugeführt wird. Dies bedeutet, daß durchschnittlich pro Zeiteinheit etwa die gleiche Masse an Frischkompost zugeführt und an veredeltem Kompost abgeführt wird. Dabei sind selbstverständlich Verluste zu berücksichtigen, so daß die Masse an zuzuführendem Frischkompost etwas größer ist als die Masse an abzuführendem veredelten Kompost. Die Bereitstellung von Frischkompost und das Abführen von veredeltem Kompost erfolgt in dem Sinne kontinuierlich, als daß stets zu gewährleisten ist, daß der Nachschub an Frischkompost für die Bodentiere niemals abreißt. Dies kann realisiert werden, indem die Bereitstellung und das Abführen streng kontinuierlich, quasi kontinuierlich oder auch in Intervallen erfolgt.

In der Wandermiete können ein Heißrottebereich und ein Veredelungsbereich nacheinander entgegen der Bewegungsrichtung der Bodentiere angeordnet sein. Der Heißrottebereich und der Veredelungsbereich sind dabei sich räumlich erstreckende Bereiche der Wandermiete, in denen bestimmte Prozesse ablaufen, die sich jedoch in Zeitabhängigkeit in Bewegungsrichtung der Bodentiere verlagern. Als Veredelungsbereich ist stets der Bereich zu verstehen, in dem sich die Bodentiere momentan befinden bzw. der Bereich, in dem sich die Bodentiere gefahrlos aufhalten können. In dem Heißrottebereich läuft in bekannter Weise ein Rotteprozeß ab, der sich an eine zuvor erfolgte Rottevorbereitung anschließt. Bei der Rottevorbereitung erfolgt eine sortenreine getrennte Lagerung von Grüngut, Bioabfällen und Strukturmaterial, die beispielsweise durch mobile Häcksler oder Schredderer zerkleinert werden. Anschließend wird das vorbereitete Material in Form einer Miete aufgehaldet. In dem Heißrottebereich vollzieht sich unter Wärmeentwicklung ein intensiv ablaufender Umsetzungsprozeß der Abfälle durch Mikroorganismen. Zur Unterstützung und Vereinheitlichung der Heißrotte wird die Miete mehrfach intensiv mechanisch durchmischt und somit intensiv belüftet. Die dabei entstehende Abluft wird vorzugsweise mittels einer prozeßgeführten biologischen Abluftwäsche weiter behandelt. Das entstehende Ab- und Sickerwasser wird einer Sammlung zugeführt und einer biologischen Behandlung unterzogen. Das behandelte Wasser kann rückgewonnen und als Prozeßwasser wiederverwertet werden. Während der Heißrotte können sogenannte Starter gewonnen werden, die bei einer neu anzulegenden Wandermiete bzw. in den frisch aufgehaldeten Abfällen wiederverwertet werden können. Während der Nachrotte kommt es zu einer Abkülung des Komposts. Es ist schließlich möglich, den gesamten Rotteprozeß, d. h. einschließlich Aufhaldung, Heißrotte und Nachrotte, gemeinsam mit dem Veredelungsprozeß mitteles Bodentieren entlang einer Kreisbahn oder einer ovalen Bahn durchzuführen.

Der Frischkompost kann entgegen der Bewegungsrichtung der Bodentiere in einer horizontalen Richtung gefördert werden, wobei der Betrag der Fördergeschwindigkeit des Frischkomposts dem Betrag der mittleren Fortbewegungsgeschwindigkeit der Bodentiere in dem Frischkompost entspricht. Hierdurch wird gewährleistet, daß die Bodentiere stets ausreichend mit neuem, für sie verwertbaren Frischkompost versorgt werden und es zu keinem Abbruch des kontinuierlichen veredelungsprozesses kommt. Dies kann beispielsweise dadurch realisiert werden, daß sich die Bodentiere entlang einer Förderstrecke entgegen der Förderrichtung der Förderstrecke fortbewegen. Die Fördergeschwindigkeit der Förderstrecke wird dabei so gewählt, daß sich die Bodentiere zwar relativ zu dem stets zur Verfügung gestellten Frischkompost fortbewegen, sie jedoch relativ zu der Umgebung keine wesentliche Vorwärtsbewegung vollführen.

Die Vorrichtung zum Aufbereiten von Frischkompost nach dem beschriebenen Verfahren weist mindestens ein Fördermittel zum Bereitstellen von Frischkompost auf. Mittels dieses mindestens einen Fördermittels wird sichergestellt, daß die Bodentiere stets ausreichend mit Frischkompost versorgt werden, so daß es zu keinem Abreißen des kontinuierlichen Veredelungsprozesses oder gar zu einem Absterben der Bodentiere kommen kann. Es kann sich dabei beispielsweise um ein Fördermittel handeln, das sich über den gesamten Veredelungsbereich des Frischkomposts und darüber hinaus erstreckt und eine kontinuierliche Geschwindigkeit des Frischkomposts entgegen der Bewegungsrichtung der Bodentiere bereitstellt.

Das Fördermittel kann den Frischkompost so bereitstellen, daß die Bewegungsrichtung der Bodentiere horizontal ist. Damit ist es möglich, den Frischkompost in Form einer Miete aufzuhalden und mittels bekannter Vorrichtungen den Frischkompost bereitzustellen, den veredelten Kompost abzuziehen und die Miete für eine gründliche Durchmischung der Bestandteile und eine gleichmäßige Temperaturverteilung innerhalb der Miete umzusetzen.

Es kann sich dabei bei dem Fördermittel um eine entlang einer Kreisbahn oder einer ovalen Bahn verfahrbare Häckslervorrichtung handeln. Die Häckslervorrichtung wird dabei so betrieben, daß sie in Richtung der Bewegungsrichtung der Bodentiere den Frischkompost oder auch noch nicht kompostierte organische Abfälle bereitstellt. Die Bereitstellung kann kontinuierlich oder stapelweise erfolgen.

Entlang der Kreisbahn oder der ovalen Bahn kann eine verfahrbare Mietenumsetzvorrichtung zum Durchmischen der Wandermiete und eine verfahrbare Abführvorrichtung für den veredelten Kompost vorgesehen sein. Die Abführvorrichtung bewegt sich dabei hinter den Bodentieren in Bewegungsrichtung der Bodentiere und führt das veredelte Material einer weiteren Bearbeitung, beispielsweise einer Siebung oder schließlich einer Verpackung, zu. Die Abführvorrichtung kann dabei streng kontinuierlich arbeiten, was bedeutet, daß sie sich konstant mit der Fortbewegungsgeschwindigkeit der Bodentiere in dem Frischkompost bewegt. Es ist aber auch möglich, die Abführvorrichtung stapelweise arbeiten zu lassen, d. h. sie erst dann in Betrieb zu setzen, wenn ein gewisses Volumen an veredeltem Kompost durch die Bodentiere hergestellt wurde und zum Abführen bereit steht. Die Mietenumsetzvorrichtung dient dazu, für eine gründliche Durchmischung und einen gleichmäßigen Rotteprozeß innerhalb der Miete zu sorgen. Dabei werden nahezu identische Bedingungen in allen Bereichen der Miete auf einer Höhe in Umlaufrichtung der Wandermiete erreicht, während ohne Umsetzung im Inneren der Miete beispielsweise höhere Temperaturen auftreten, als dies in den Randbereichen der Miete der Fall ist. Ein gleichmäßiger Temperaturverlauf ist wichtig, da die Geschwindigkeit des Rotteprozesses abhängig von der Temperatur ist und die Herstellung möglichst homogenen Frischkomposts angestrebt wird.

Es können zwei nebeneinander liegende Förderstrecken mit Fördermitteln vorgesehen sein, die entgegengesetzte Förderrichtungen aufweisen und mittels einer Querfördereinrichtung miteinander verbunden sind, wobei auf der ersten Förderstrecke der Heißrottebereich und auf der zweiten Förderstrecke der Veredelungsbereich angeordnet ist. Am Anfang der ersten Förderstrecke wird Ausgangsmaterial, beispielsweise gehäckselte Bioabfälle, Grüngut, Mist, Gülle, Stroh o. dgl. zugeführt. Das Ausgangsmaterial bewegt sich mit steuerbarer bzw. regelbarer Geschwindigkeit entlang der Förderstrecke, wobei der auf der Aktivität von Mikroorganismen basierende Rotteprozeß gleichmäßig voranschreitet und Frischkompost entsteht. Die Förderstrecke wird kontinuierlich oder stapelweise so mit Ausgangsmaterial versorgt, daß der Materialstrom entlang der Förderstrecke möglichst niemals abreißt. Die Fördermittel sorgen dabei dafür, daß gleichzeitig eine Umsetzung und somit eine gleichmäßige Durchmischung des Materials in dem Sinne stattfindet, daß sich keine unterschiedlichen Zonen auf einer Höhe der Förderstrecke ausbilden können. Am Ende der Förderstrecke befindet sich das Material beispielsweise in dem Stadium der Heißrotte. Daraufhin wird es mittels einer Querfördereinrichtung, beispielsweise einer Sieb- und Überladeeinrichtung, so gesiebt und durchmischt, daß eine Abkühlung des Frischkomposts erfolgt. Der gesamte Frischkompost oder Teile davon können dann dem Anfangsbereich einer zweiten Förderstrecke zugeführt werden. Mit der Fördermittel aufweisenden Förderstrecke ist es ist aber auch möglich, reinen Frischkompost ohne anschließenden Veredelungsprozeß herzustellen. Dafür wird am Ende der Förderstrecke der gesamte Frischkompost oder Teile davon abgeführt und anschließend verpackt. Wenn der Frischkompost der zweiten Förderstrecke zugeführt wird, bewegt er sich auf dieser Förderstrecke vorzugsweise parallel zu und entgegen der Bewegungsrichtung der ersten Förderstrecke, d. h. zurück in Richtung des Anfangsbereichs der ersten Förderstrecke. Entlang der zweiten Förderstrecke ist der Veredelungsbereich angeordnet, wobei sich die Bodentiere entgegen der Förderrichtung der zweiten Förderstrecke durch den Frischkompost durchfressen. Aufgrund der Fördergeschwindigkeit der zweiten Förderstrecke bewegen sich die Bodentiere jedoch lediglich relativ innerhalb des Frischkomposts und nicht oder nur wenig oder gar nicht relativ zu der Umgebung. Dies bedeutet, daß die Bodentiere niemals den Anfangsbereich der zweiten Förderstrecke erreichen und der Veredelungsprozeß nicht abreißt. An das Ende der zweiten Förderstrecke gelangt somit der veredelte Frischkompost, der mittels einer Abführeinrichtung, beispielsweise einer Wiege- und Absackeinrichtung, abgeführt werden kann. Das Abführen des fertigen veredelten Komposts kann dabei wiederum kontinuierlich oder stapelweise erfolgen.

Die Fördermittel können eine Mehrzahl von Schnecken, Schubstangen-Klappkratzern, Kratzbodenketten und/oder Schuppenbändern aufweisen. Diese und andere Vorrichtungen sorgen letztendlich dafür, daß sich das Material entlang der Förderstrecke mit kontinuierlicher, steuerbarer Geschwindigkeit bewegt. Zusätzlich wird das Material so durchmischt, daß es zu keiner Bildung von Zonen innerhalb des Materials kommen kann. Bei einer Verwendung von Schnecken können diese beispielsweise paarweise so gegenläufig angetrieben werden, daß sich die gewünschte Relativgeschwindigkeit bei ausreichend guter Durchmischung ergibt.

Es kann eine Vorrichtung zum Bestimmen der Position der Bodentiere in dem Frischkompost vorgesehen sein. Abhängig von dem Ergebnis der Bestimmung der Position der Bodentiere kann dann die Bereitstellungsgeschwindigkeit des Frischkomposts bzw. die Fördergeschwindigkeit der Fördermittel so gewählt werden, daß sich der Veredelungsbereich in dem gewünschten Bereich innerhalb des Frischkomposts befindet. Ziel ist es dabei stets zu verhindern, daß die Bodentiere in einen Bereich gelangen, in dem sie nicht ausreichend mit Frischkompost versorgt werden. Auch erfolgt eine Kontrolle, ob Probleme oder Störungen bei den Bodentieren vorliegen. Die Population der Bodentiere kann überprüft und ggf. durch Hinzugabe von weiteren Bodentieren angepaßt werden.

Die Vorrichtung zum Bestimmen der Position der Bodentiere in dem Frischkompost kann mindestens zwei in Bewegungsrichtung der Bodentiere beabstandet angeordnete verschiebliche Meßstellen aufweisen. Eine Regelung der Bereitstellungsgeschwindigkeit des Frischkomposts kann dann beispielsweise so erfolgen, daß diese Geschwindigkeit erhöht wird, sobald die Bodentiere an der ersten, in Bewegungsrichtung der Bodentiere vorne liegenden Meßstelle festgestellt werden. Die Geschwindigkeit kann entsprechend verringert werden, wenn festgestellt wird, daß sich Bodentiere noch an der zweiten, in Bewegungsrichtung der Bodentiere hinten liegenden Meßstelle befinden. Zum Bestimmen der Position der Bodentiere können Proben des Komposts entnommen und die Dichte an Bodentieren festgestellt werden. Es ist auch möglich, die Bodentiere an die Oberfläche der Miete durch Anlegen eines elektrischen Felds elektrisch auszutreiben. Zur Überwachung der Ergebnisse der Positionsbestimmung der Bodentiere kann beispielsweise ein Bildverarbeitungssystem verwendet werden. In Abhängigkeit von den Ergebnissen kann die Anzahl von Bodentieren erhöht oder abgesenkt werden.

Die Erfindung wird im folgenden anhand von Ausführungsbeispielen weiter erläutert und beschrieben.
- Fig. 1: zeigt eine Draufsicht auf eine erste Ausführungsform einer Vorrichtung zum Aufbereiten von Frischkompost.
- Fig. 2: zeigt eine Draufsicht auf eine zweite Ausführungsform einer Vorrichtung zum Aufbereiten von Frischkompost.
- Fig. 3: zeigt eine Seitenansicht der zweiten Ausführungsform der Vorrichtung zum Aufbereiten von Frischkompostgemäß Fig. 2.
- Fig. 4: zeigt eine Draufsicht auf eine dritte Ausführungsform einer Vorrichtung zum Aufbereiten von Frischkompost.
- Fig. 5: zeigt eine Seitenansicht der dritten Ausführungsform der Vorrichtung zum Aufbereiten von Frischkompost gemäß Fig. 4.
- Fig. 6: zeigt eine Draufsicht auf eine weitere Ausführungsform der Vorrichtung zum Aufbereiten von Frischkompost.
- Fig. 7: zeigt eine Seitenansicht der Ausführungsform der Vorrichtung zum Aufbereiten von Frischkompost gemäß Fig. 6.
- Fig. 8: zeigt eine Draufsicht auf eine weitere Ausführungsform der Vorrichtung zum Aufbereiten von Frischkompost.
- Fig. 9: zeigt eine Seitenansicht der Ausführungsform der Vorrichtung zum Aufbereiten von Frischkompost gemäß Fig. 8.
- Fig. 10: zeigt eine Draufsicht auf eine weitere Ausführungsform der Vorrichtung zum Aufbereiten von Frischkompost.
- Fig. 11: zeigt eine Seitenansicht der Ausführungsform der Vorrichtung zum Aufbereiten von Frischkompost gemäß Fig. 10.
- Fig. 12: zeigt eine Detailansicht einer Mobilhalle gemäß Fig. 1.
- Fig. 13: zeigt eine Seitenansicht einer Wendelwellensiebmaschine gemäß den Fig. 1 und 2.
- Fig. 14: zeigt eine Draufsicht auf die Wendelwellensiebmaschine gemäß Fig. 13.
- Fig. 15: zeigt eine Draufsicht auf eine weitere Ausführungsform der Vorrichtung zum Aufbereiten von Frischkompost.
- Fig. 16: zeigt eine Seitenansicht der Ausführungsform der Vorrichtung zum Aufbereiten von Frischkompost gemäß Fig. 15.

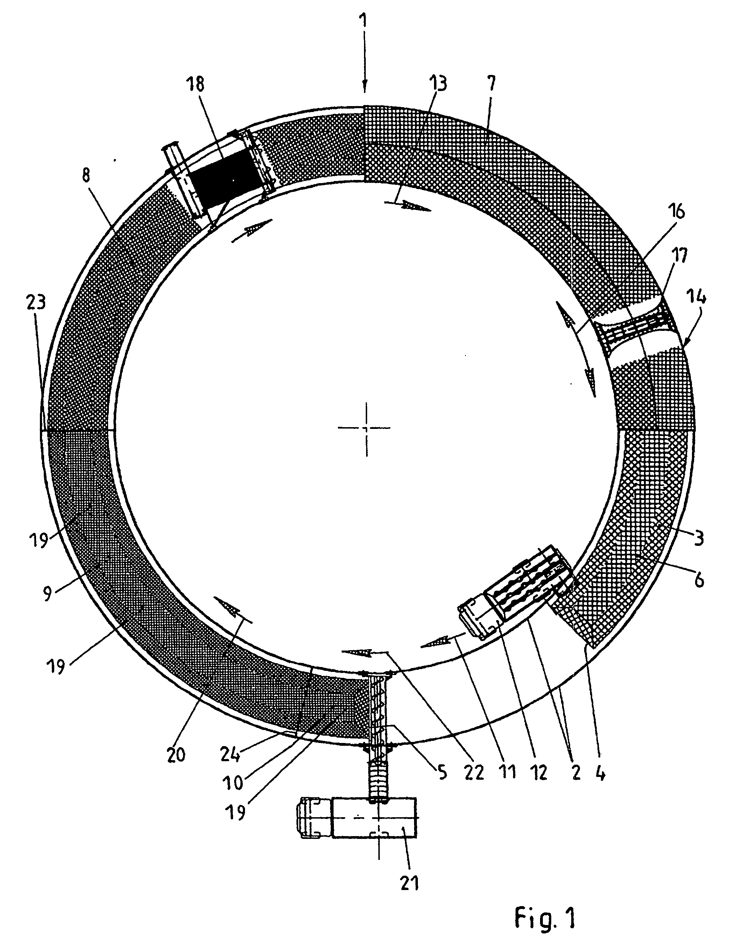

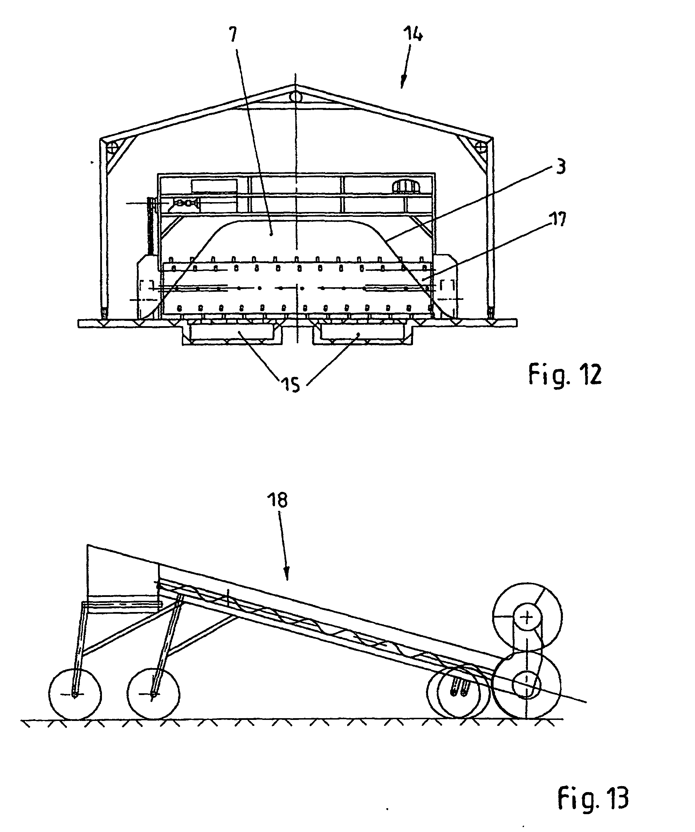

Fig. 1 zeigt eine Draufsicht auf eine kreisförmige Kompostierungsanlage 1. Die Kompostierungsanlage 1 weist zwei kreisförmige Schienen 2 auf, zwischen denen eine trapezförmige Wandermiete 3 aufgehaldet ist. Der Außendurchmesser der Kompostierungsanlage 1 beträgt etwa 65 m, während die mittlere Länge der Wandermiete 3 bei etwa 160 m liegt. Die mittlere Höhe der Wandermiete beträgt 1,9 m, die mittlere Mietenbreite 4,2 m, das mittlere Mietenvolumen 1.280 m³. Sebstverständlich sind dies nur beispielhafte Werte, die nahezu beliebig anpaßbar sind. Die Wandermiete 3 besitzt ein erstes Ende 4 und ein zweites Ende 5 und ist somit nicht ganz vollständig entlang des Umfangs der Kompostierungsanlage 1 geschlossen. Die Wandermiete 3 besitzt grundsätzlich fünf unterschiedliche Bereiche, die sich entgegen dem Uhrzeigersinn zwischen dem ersten Ende 4 und dem zweiten Ende 5 der Wandermiete 3 erstrecken: einen Aufhaldungsbereich 6, einen Heißrottebereich 7, einen Nachrottebereich 8, einen Veredelungsbereich 9 und einen Abführbereich 10. An dem ersten Ende 4 der Wandermiete 3 wird mittels einer entlang der Kreisbahn verfahrbaren Häckslervorrichtung 12 in Richtung des Pfeils 11 die Wandermiete 3 aufgehaldet. Die Häckslervorrichtung 12 zerkleinert, zerfasert und durchmischt das zur Kompostierung bestimmte Ausgangsmaterial, beispielsweise Grünschnitt, Grünund Strauchgut, Bioabfälle, Holzhäcksel, Strukturmaterial entsprechend der vorgesehenen Strukturgröße und Mischungsanteile, kompostierbare gewerbliche Reststoffe und kompostierbare landwirtschaftliche Reststoffe. In dieser Weise wird das zerkleinerte Ausgangsmaterial zwischen den Schienen 2 zu einer trapezförmigen Wandermiete 3 aufgehaldet. Es wäre jedoch ebenfalls denkbar, die Miete in der Form einer Dreiecksmiete oder einer anderen geeigneten geometrischen Konfiguration anzuordnen. Ein Teil des Ausgangsmaterials wird in dem Heißrottebereich 7 einem bekannten Heißrotteprozeß unterzogen, wobei Mikroorganismen eine erste Umwandlung des Ausgangsmaterials in Kompoststoffe unter Wärmeentwicklung übernehmen. Die Heißrotte benötigt einen Zeitraum von etwa 1 bis 2 Wochen abhängig von der Art des Ausgangsmaterials, den Bodentieren 19 und der Jahreszeit. Heißrottebereich 7 ist mittels einer entlang der Schienen 2 gemäß Pfeil 13 verschiebbaren Mobilhalle 14 überdacht, so daß die während des Heißrotteprozesses entstehende Abluft innerhalb der Mobilhalle 14 abgesaugt und einer biologischen Wäsche zugeführt werden kann. Die überdachte Mobilhallenfläche beträgt etwa 340 m², während die Breite der Mobilhalle 14 bei ca. 7,5 m und die Firsthöhe der Mobilhalle bei etwa 4,5 m liegt. Unterhalb der Wandermiete 3 sind ringförmige Kanäle 15 (Fig. 12) vorgesehen, die die beim Rottevorgang anfallenden Sickerwässer auffangen und abführen. Die Sickerwässer können anschließend einem Klärprozeß zugeführt, geklärt und gereinigt werden. Innerhalb der Mobilhalle 14 ist eine gemäß Doppelpfeil 16 verfahrbare Mietenumsetzvorrichtung 17 vorgesehen. Die Mietenumsetzvorrichtung 17 wird gemäß Doppelpfeil 16 innerhalb der Mobilhalle 14 und durch den Heißrottebereich 7 verfahren und sorgt dabei für eine gleichmäßige Durchmischung und Umsetzung der Wandermiete 3 in diesem Bereich. Die Mietenumsetzvorrichtung 17 kann selbstfahrend, angehängt oder fremdangetrieben betrieben werden. Dabei ist es insbesondere wichtig, daß eine Durchmischung des sich im Kernbereich der Wandermiete 3 befindenden Materials mit dem sich in den Außenbereichen der Wandermiete 3 befindenden Materials erreicht wird, damit möglichst homogener Kompost produziert werden kann. Im Gegenuhrzeigersinn weitergehend ist am Ende der Mobilhalle 14 der Nachrottebereich 8 vorgesehen. Die Nachrotte dauert etwa 12 Wochen an. In dem Nachrottebereich 8 erfolgt unter Wärmeabgabe eine weitere Durchmischung der Wandermiete 3 und eine Siebung des Frischkomposts mittels einer Wendelwellensiebmaschine 18. Die Wendelwellensiebmaschine 18 sorgt für eine Aussiebung der groben Struktur- und Kompostanteile innerhalb des Frischkomposts, die dann dem beginnenden Rotteprozeß, beispielsweise an dem Ende 4 der Wandermiete 3, als sogenannte Starter beigegeben werden können. Diese Starter sorgen dafür, daß der Rotteprozeß am Ende 4 der Wandermiete 3 in Gang gesetzt wird und sich innerhalb der Wandermiete 3 fortsetzt. Anstelle der Wendelwellensiebmaschine 18 kann jedoch auch eine andere Siebmaschine, beispielsweise eine Flächenschüttelsieb- oder Rundsiebmaschine eingesetzt werden.

Anschließend an den Nachrottebereich 8 ist der Veredelungsbereich 9 vorgesehen. Innerhalb des Veredelungsbereichs 9 befindet sich eine Vielzahl von Bodentieren 19, z. B. etwa 200.000 adulte Eisenia foetida, die sich in Richtung des Pfeils 20 innerhalb der Wandermiete 3 fortbewegen. Es kann sich aber auch um andere Regenwürmer oder Asseln handeln. Die Wanderungsgeschwindigkeit einer einzelnen adulten Eisenia foetida, die nicht durch andere Tiere beeinflußt wird und optimale Freßbedingungen auffindet, liegt bei etwa 10 bis 30 cm in 24 Stunden. Bei den genannten Bedingungen der beispielhaften Kompostierungsanlage 1 und basierend auf den angegebenen Abmessungen ergibt sich jedoch aufgrund der hohen Anzahl bzw. Besatzdichte von Individuen und dem somit pro Individuum und pro Volumeneinheit verringertem Nahrungsangebot eine durchschnittliche Wandergeschwindigkeit der Freßfront der veredelungszone 9 von etwa 1 bis 3 m in 24 h. Die Wurmrotte bzw. die Veredelungsrotte benötigt etwa 12 bis 31 Tage je nach Besatzdichte, Substratzusammensetzung und Temperatur/Feuchte. Die Bodentiere 19 nehmen den Frischkompost auf, d. h. sie fressen diesen, verdauen ihn und scheiden Restmaterial aus. Dabei nimmt Eisenia foetida etwa 0,8 bis 1 g Nahrung pro Tag zu sich. Es liegen aerobe Verhältnisse vor. Der Ammoniumgehalt liegt unterhalb von 0,5 mg/g Abfall bezogen auf das Frischgewicht. Eisenia foetida bevorzugt einen Temperaturbereich von 15 bis 25°C und toleriert einen Temperaturbereich von 12 bis 30°C. Bevorzugt ist ein Feuchtegehalt von 80 bis 90 %, während ein Feuchtegehalt von 60 bis 90 % toleriert wird. Der pH-Wert liegt zwischen 5 und 9. Für die Durcharbeitung von 500 m³ Frischkompost werden bei Annahme eines Verweilzeitraums von ca. 12 bis 30 Tagen ca. 230.000 adulte Eisenia foetida benötigt. Bei dem ausgeschiedenen Material handelt es sich um besonders hochwertigen veredelten Kompost, der insbesondere als Spezialsubstrat für die Aufforstung devastierter Ödlandböden oder für den Landschaftsgartenbau geeignet ist. Der Veredelungsbereich 9 erstreckt sich über einen wesentlichen Teil des Umfangs der Kompostierungsanlage 1. Bei dem Anlagendurchmesser von etwa 65 m kann die mittlere Erstreckung des Veredelungsbereichs 9 in der Größenordnung von 20 bis 30 m liegen. Durch eine derart große Erstreckung des Veredelungsbereichs 9 ist es möglich, eine bewußt ausgewählte Population von Bodentieren 19 zu verwenden, die sich aus Bodentieren 19 unterschiedlicher Größen, Altersstufen, Fortbewegungsgeschwindigkeit, Freßgeschwindigkeit und Freßverhalten zusammensetzt. Beispielsweise ist es möglich, bewußt Bodentiere 19 einer Art ganz unterschiedlicher Altersstufen in die Kompostierungsanlage 1 einzubringen.

Eine derartige Altersverteilung ergibt sich jedoch auch automatisch durch die Vermehrung und das Absterben der Bodentiere 19 innerhalb der Wandermiete 3. Es ist dabei zu erwarten, daß die größeren, stärkeren Bodentiere 19 vornehmlich im vorderen Bereich des Veredelungsbereich 9 gemäß Pfeil 20 anzufinden sind, während die kleinen, jüngeren oder schwächeren Bodentiere 19 vornehmlich in dem hinteren Bereich des Veredelungsbereichs 9 anzufinden sind. Die großen Bodentiere 19 werden dabei besonders große Partikel innerhalb des Komposts aufnehmen und verwerten, so daß für die kleineren Bodentiere 19 kleinere Partikel verbleiben, die diese einer Verwertung unterziehen. Die Bodentiere 19 finden somit optimale Bedingungen vor, um sich ihrer Natur entsprechend innerhalb des Veredelungsbereich 9 des Komposts frei fortzubewegen. Hierdurch wird ein optimaler Durchsatz der Kompostierungsanlage 1 erreicht. Die Bodentiere 19 werden sich stets in Richtung des Pfeils 20 in Richtung des frischen Futters fortbewegen, so daß an dem Ende 5 der Wandermiete 3 veredelter, nahezu wurmfreier Fertigkompost in dem Abführbereich 10 vorliegt. Dieser Abführbereich 10 wird mittels einer Abführvorrichtung 21, die gemäß Pfeil 22 entsprechend der Wanderrichtung der Bodentiere 19 auf den Schienen 2 verfahren wird, abgeführt. Am Ende der Abführeinrichtung 21 ist beispielsweise eine wiege- und Absackeinrichtung für den fertigen, veredelten Kompost vorgesehen. Die Jahresleistung einer derartigen Kompostierungsanlage liegt bei etwa 3.000 t Eingangsmaterial pro Jahr.

Die Kompostierungsanlage 1 weist weiterhin eine erste Meßstelle 23 und eine zweite Meßstelle 24 auf, an denen jeweils bestimmt wird, ob sich Bodentiere 19 im Bereich der Meßstelle 23 bzw. 24 aufhalten. An der Meßstelle 23 wird überprüft, ob die in Richtung des Pfeils 20 wandernden Bodentiere 19 bereits so weit vorgedrungen sind. Falls dies der Fall ist, ist ein weiterer Bereich des Nachrottebereichs 8 für die Bodentiere 19 freizugeben. Dies bedeutet, daß die Wendewellensiebmaschine 18 sich nicht mehr in diesem Bereich aufhalten sollte. Ferner kann die Mobilhalle 14 in Richtung des Pfeils 13 verfahren werden, um den Heißrottebereich 7 zu verlagern. Es versteht sich, daß die Meßstelle 23 bei einem Fortschritt der Bodentiere 19 ebenfalls in Richtung des Pfeils 20 verfahren bzw. an einer in Richtung des Pfeils 20 liegenden neuen Meßstelle 23 gemessen wird. Entsprechendes gilt für die Meßstelle 24, wobei hier überprüft wird, ob sich noch Bodentiere 19 im Bereich der Meßstelle 24 aufhalten oder ob diese bereits in Richtung des Pfeils 20 weiter gewandert sind. Wenn sich keine oder nur wenige Bodentiere 19 im Bereich der Meßstelle 24 aufhalten, kann die Abführvorrichtung 21 ihren Betrieb in diesem Bereich aufnehmen und den veredelten Kompost abführen. Entsprechend dem durch das Abführen von veredeltem Kompost größer gewordenen Abstand zwischen den Enden 4 und 5 der Wandermiete 3 kann die Häckslervorrichtung 12 in Richtung des Pfeils 11 frisches Material aufhalden und den Rotteprozeß starten.

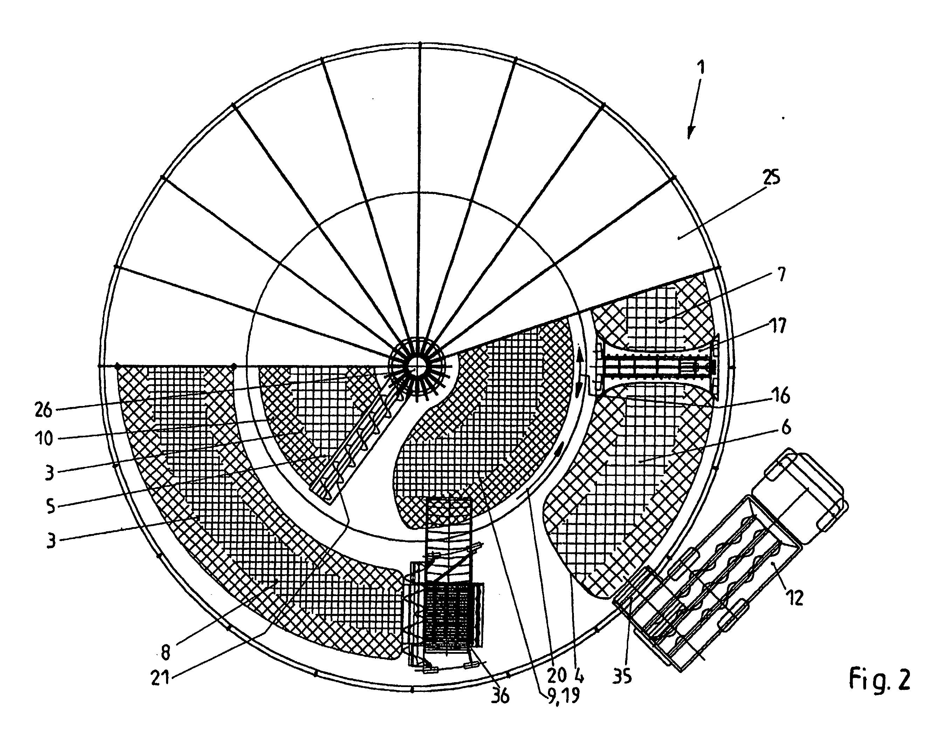

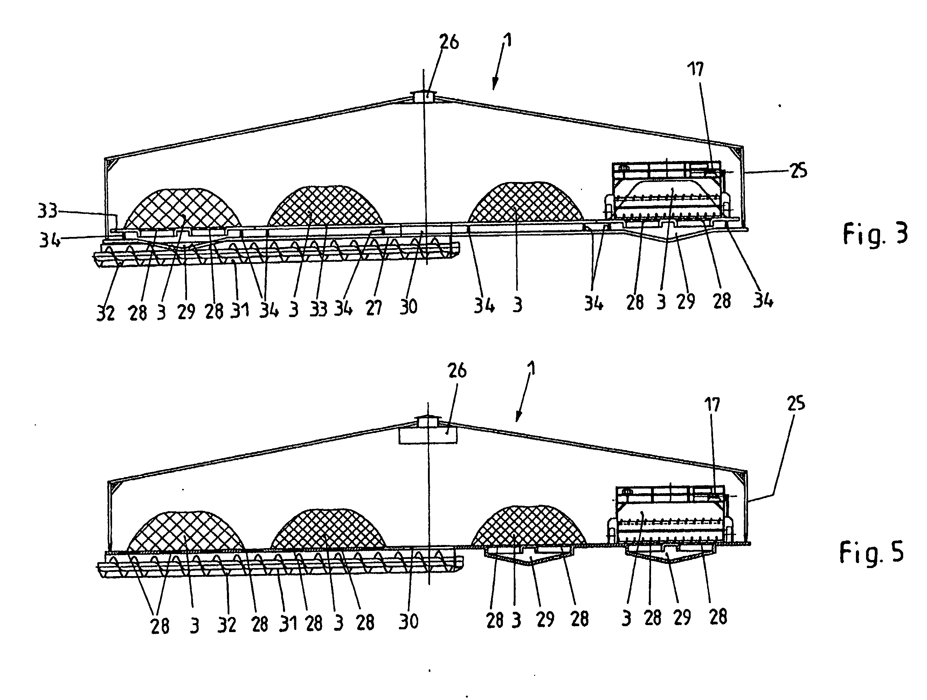

Die Figuren 2 und 3 zeigen eine zweite Ausführungsform der Kompostierungsanlage 1 mit zwei konzentrischen Wandermieten 3. In diesem Fall weist die Kompostierungsanlage 1 eine runde Halle 25 auf, die die Kompostierungsanlage 1 vollständig überdacht. Damit ist die Kompostierungsanlage 1 vollständig witterungsunabhängig, und der Rotte- und Veredelungsprozeß kann intensiver und unter optimal steuerbaren Bedingungen verkürzt ablaufen. Die Durchsatzleistung der Anlage erhöht sich. Die Halle 25 weist in ihrem oberen Bereich eine zentrisch angeordnete Abluftöffnung 26 auf, in der ein biologischer Abluftwäscher (nicht dargestellt) untergebracht ist. Die zwei konzentrische Wandermieten 3 sind auf separat antreibbaren segmentförmigen Plattformen 33 gelagert, die mittels Rollen 34 relativ zu einer feststehenden Bodenplatte 27 drehbar sind. Die äußere und die innere Plattform 33 mit der jeweiligen Wandermiete 3 sind vorzugsweise synchron angetrieben, es ist jedoch auch möglich, die beiden Plattformen 33 mit unterschiedlichen Geschwindigkeiten anzutreiben. Unterhalb der äußeren Miete 3 sind siebartige Schlitzöffnungen 28 vorgesehen, durch die Sickerwasser aus der Wandermiete 3 in eine ringförmige Sickerwasserrinne 29 gelangt. In der Mitte der Bodenplatte 27 ist eine Durchfallöffnung 30 vorgesehen, unterhalb der nach außen weisend eine Förderrinne 31 mit einer Förderschnecke 32 vorgesehen ist, durch die der Fertigkompost mittels der nach außen fördernden Förderschnecke 32 einer nicht dargestellten Überlade- und Absackeinrichtung zugeführt werden kann. Die Wandermieten 3 werden mittels der mobilen Häckslervorrichtung 12 aufgehaldet. Hierzu weist die ansonsten geschlossene Halle 25 eine Durchladeöffnung 35 auf, durch die das zerkleinerte Ausgangsmaterial in das Innere der Halle 25 gelangt. Die äußere wandermiete 3 oder Ringmiete besitzt einen Aufhaldungsbereich 6, einen Heißrottebereich 7 und einen Nachrottebereich 8. Sie wird mittels der Mietenumsetzvorrichtung 17 gemäß Doppelpfeil 16 umgesetzt und durchmischt. An dem dem Ende 4 der Wandermiete 3 gegenüberliegenden Ende, d. h. am Ende des Nachrottebereichs 8, wird der Kompost mittels einer Überladevorrichtung 36 zu der inneren Wandermiete 3 aufgeschichtet. Innerhalb der inneren Wandermiete 3 befindet sich der Veredelungsbereich 9 mit den Bodentieren 19, die sich in Richtung des Pfeils 20 durch die Wandermiete 3 bewegen und den Kompost veredeln. Am Ende 5 der inneren Wandermiete 3 ist die Abführvorrichtung 21 in Form einer ortsfesten Förderschnecke angeordnet, die den veredelten Kompost in Richtung und durch die Durchfallöffnung 30 in der Bodenplatte 27 fördert. Die Fördermittel 12, 21 und 36 können somit ortsfest sein, da bei dieser Ausführungsform der Kompostierungsanlage 1 die Wandermieten 3 relativ zu den Fördermitteln bewegt werden.

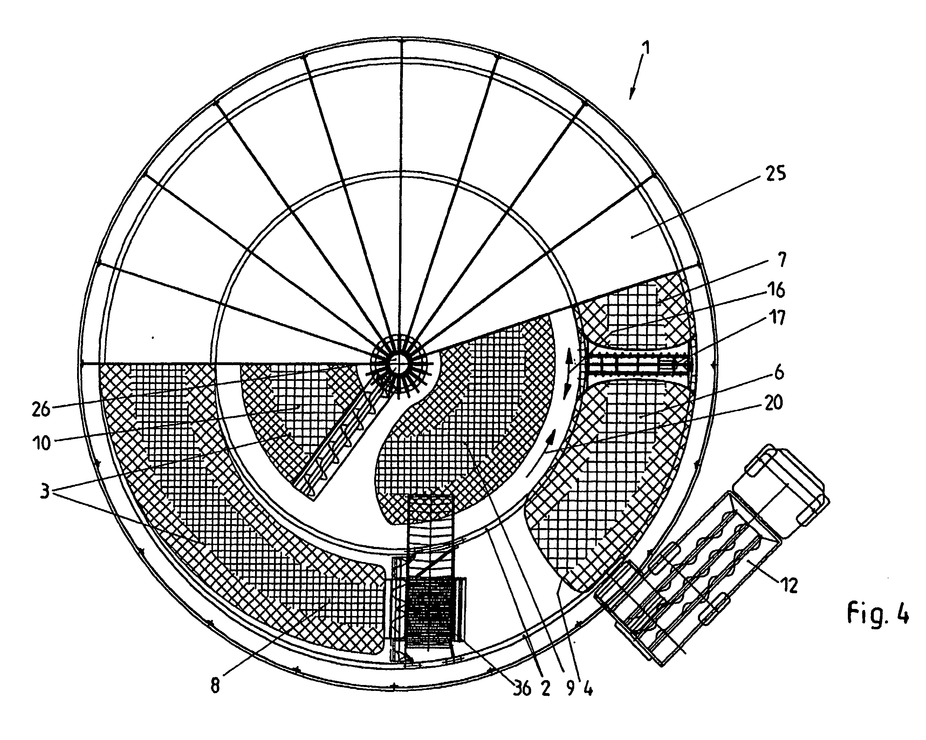

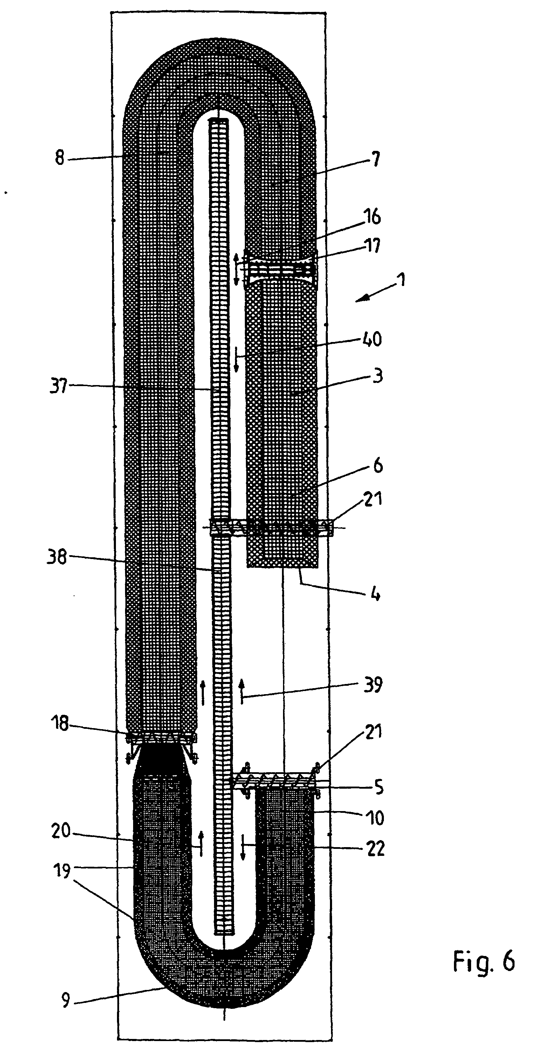

Die Fig. 4 und 5 zeigen eine dritte Ausführungsform der Kompostierungsanlage 1, die in bezug auf die Anordnung der Wandermieten 3 und die Ausbildung der Halle 25 mit der Ausführungsform gemäß Fig. 2 übereinstimmt. Im Gegensatz zu Fig. 2 sind hier die beiden konzentrischen Wandermieten 3 jedoch ortsfest in der Halle 25 angeordnet. Dementsprechend sind die Fördermittel 12, 21, 36 verfahrbar. Hierfür sind die bereits aus der Beschreibung zu Fig. 1 bekannten Schienen 2 vorgesehen. Auch bei dieser Ausführungsform der Kompostierungsanlage 1 wird innerhalb der äußeren Wandermiete 3 Frischkompost erzeugt, der dann in der inneren Wandermiete 3 durch die Bodentiere 19 veredelt wird. Ein besonderer Vorteil dieser Ausführungsform der Kompostierungsanlage 1 besteht darin, daß die gesamte Kompostierungsanlage 1 auf Rollen abgestützt und drehbar ist, so daß mittels der feststehenden Häckslervorrichtung 12 das Material aufgehaldet werden kann.

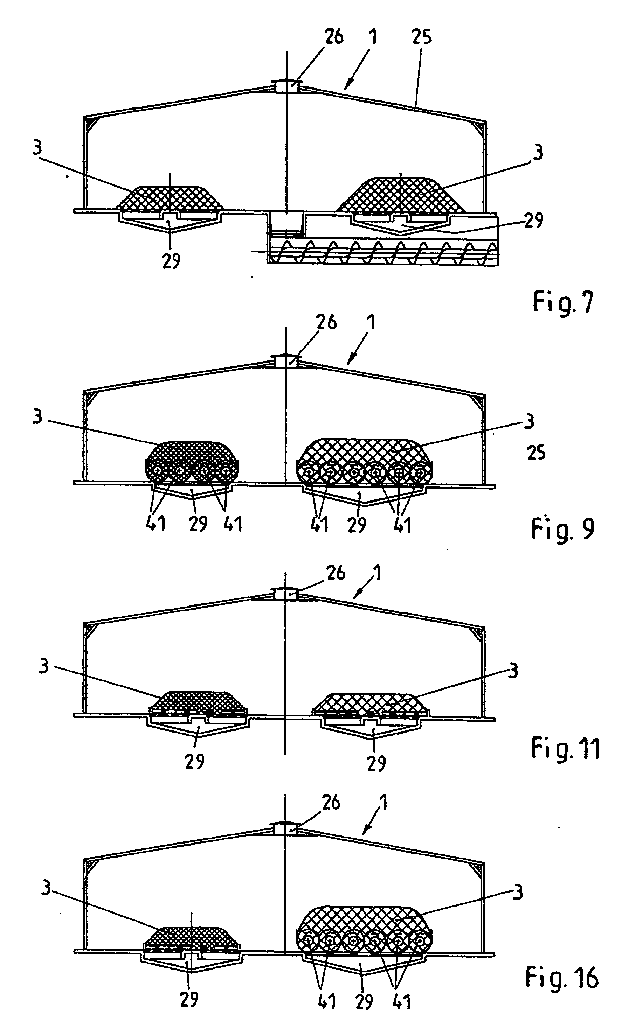

In den Fig. 6 und 7 ist eine weitere Ausführungsform der Kompostierungsanlage 1 dargestellt. Entsprechend Fig. 1 ist hier die Wandermiete 3 als einsträngige kontinuierliche Wandermiete 3 ausgebildet. Die Kompostierungsanlage 1 ist jedoch nicht in einer runden, sondern in einer rechteckigen Halle 25 untergebracht, durch die die gesamte Kompostierungsanlage 1 überdacht wird. Der Kompostierungsmaterial ist als trapezförmige Wandermiete 3 in besonders platzsparender Art und Weise in der rechteckigen Halle 25 untergebracht. Eine derartige Ausbildung der Wandermiete 3 kann sich insbesondere bei bereits bestehenden Hallen anbieten. Das Ausgangsmaterial wird zunächst mittels einer nicht dargestellten Häckslervorrichtung 12 an dem Ende 4 des Aufhaldungsbereichs 6 aufgehaldet. Hier beginnen in bereits beschriebener Weise der Heißrotteprozeß, der Nachrotteprozeß und die sich in dem veredelungsbereich 9 anschließende Veredelung mittels der in Richtung des Pfeils 20 wandernden Bodentiere 19. Auch die Mietenumsetzvorrichtung 17 und die Wendewellensiebmaschine 18 sind bereits aus der Beschreibung zu Fig. 1 bekannt. Das Besondere der dargestellten Ausführungsform der Kompostierungsanlage 1 besteht darin, daß sich entlang der Längsmittelachse der Halle 25 zwei gegenläufig angetriebene Förderbänder 37, 38 befinden. In der in Fig. 6 dargestellten Position der Wandermiete 3, bei der sich der abzuführende veredelte Kompost unterhalb der Quermittelebene der Kompostanlage 1 befindet, fördert die sich im fortlaufenden Prozeß gemäß Pfeil 22 bewegende Abführeinrichtung 21 den veredelten Kompost auf das Förderband 38, das den veredelten Kompost gemäß Pfeil 39 abführt und der zweiten Abführeinrichtung 21 übergibt, die sich unterhalb des Hallenbodens befindet und den veredelten Kompost einer nicht dargestellten Abfülleinrichtung zuführt. In dem Fall, daß sich der Abführbereich 10 mit seinem Ende 5 oberhalb der Quermittelebene der Kompostierungsanlage 1 befindet, wird der veredelte Kompost mittels des Förderbands 37 in Richtung des Pfeils 40 der zweiten Abführvorrichtung 21 zugeführt und entsprechend weiter abgeführt.

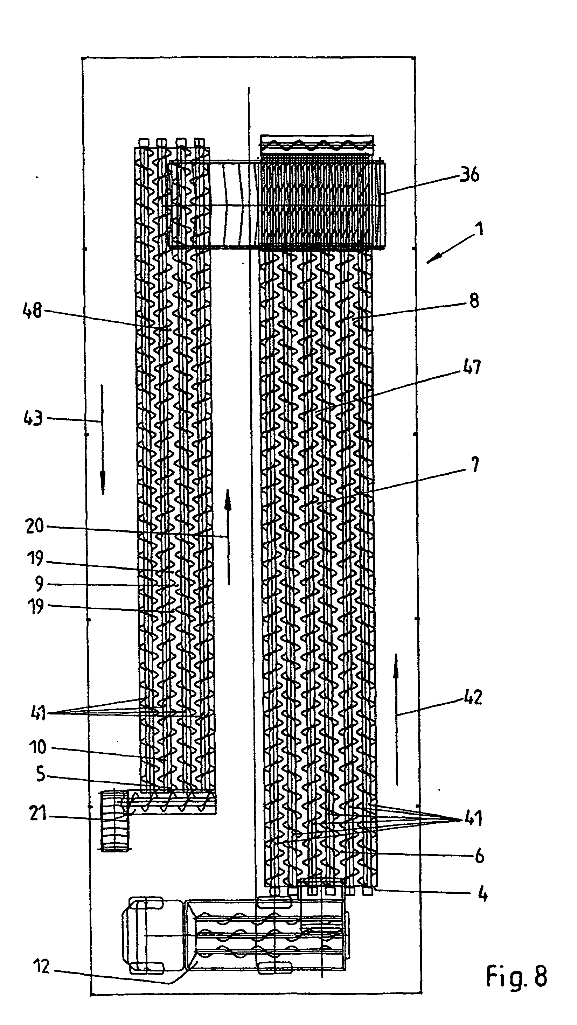

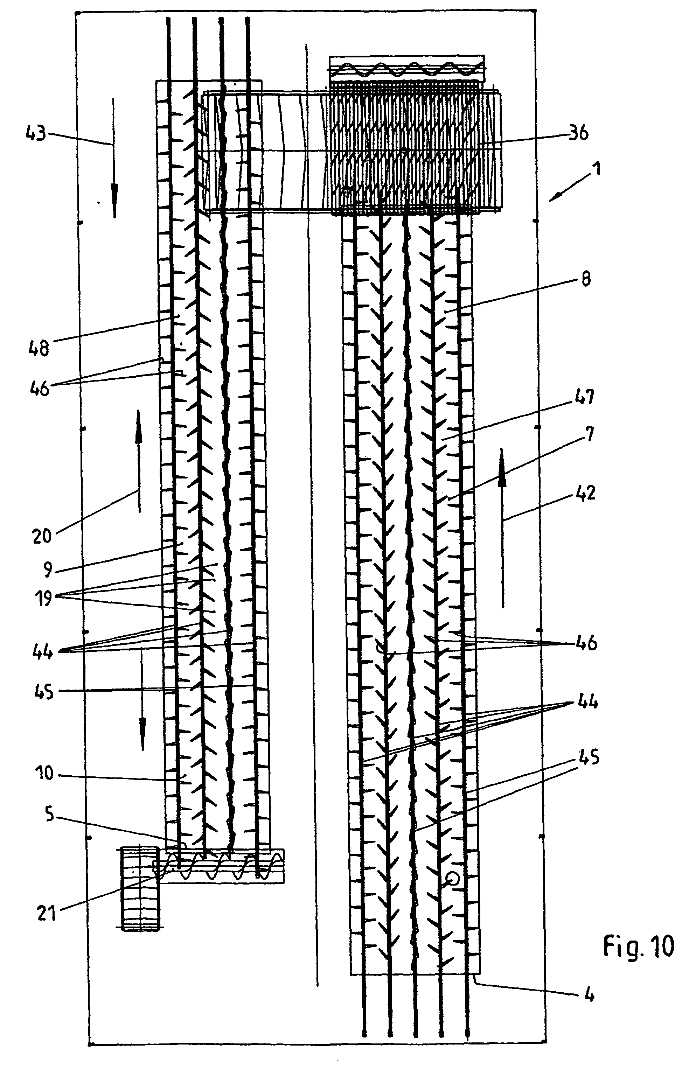

In den Fig. 8 und 9 ist eine weitere Ausführungsform der Kompostierungsanlage 1 mit zwei koninuierlich geförderten Mieten 47, 48 dargestellt. Die Gesamtmiete ist hier zweistrangig ausgebildet, wobei die beiden Bereiche der Mieten 47, 48 jeweils mit Förderschnecken 41 in Richtung des Pfeils 42 bzw. 43 transportiert werden. Es handelt sich nicht um Wandermieten, da sich die Position der Enden 4, 5 der Mieten 47, 48 nicht relativ zu der Umgebung ändert. Die Förderschnecken 41 sind jeweils paarweise gegenläufig angetrieben, und je nach Mietenbreite sind mehrere Paare von Förderschnecken 41 vorgesehen. Durch die unterschiedlichen Drehgeschwindigkeiten der Förderschnecken 41 ergibt sich neben der Förderrichtung des Materials in Richtung des Pfeils 42 bzw. 43 eine intensive Durchmischung des Materials, so daß es zu keiner Bildung isolierter Zonen in dem Kompost kommen kann. Die Zufuhr von Sauerstoff durch die Durchmischung fördert die Aktivität des Rotteprozesses. Eine zusätzliche Verwendung einer Mietenumsetzvorrichtung ist nicht erforderlich. Entlang der ersten Förderstrecke befinden sich die bekannten Rottebereiche 6, 7, und 8. Am Ende dieser ersten Förderstrecke ist die bekannte Überladevorrichtung 36 vorgesehen, die den Frischkompost von der ersten Förderstrecke auf die zweite Förderstrecke überlädt. Die Überladevorrichtung 36 dient zusätzlich zum Sieben des Frischkomposts. Es ist möglich, das Förderband der Überladevorrichtung gegenüber der in Fig. 8 dargestellten Stellung so um 90° im Uhrzeigersinn zu verschwenken, daß an dieser Stelle Frischkompost entnommen werden kann. Dieser Frischkompost kann dann in üblicher Weise verpackt werden, ohne daß er der Veredelung auf der zweiten Förderstrecke zugeführt wird. Falls jedoch eine Veredelung des Frischkomposts gewünscht wird, befindet sich die Überladevorrichtung 36 in der in Fig. 8 dargestellten Stellung, so daß der Frischkompost von der ersten Förderstrecke auf die zweite Förderstrecke gelangt und sich dort unter ständiger Durchmischung in Richtung des Pfeils 43 bewegt. Die Miete 48 auf der zweiten Förderstrecke weist einen geringeren Querschnitt im vergleich zu der Miete 47 auf der ersten Förderstrecke auf, da die Bestandteile in der Miete 47 durch den Umsetzungsvorgang schrumpfen. Die Bodentiere 19 bewegen sich entlang der zweiten Förderstrecke in Richtung des Pfeils 20 gegenläufig zu der Förderwirkung der Förderschnecken 41 gemäß Pfeil 43. Die Fördergeschwindigkeit der Förderschnecken 41 wird dabei vorzugsweise an die Bewegungsgeschwindigkeit der Bodentiere 19 so angepaßt, daß sich die Veredelungszone 9 immer in einem bestimmten Bereich der zweiten Förderstrecke befindet. Es ist stets zu gewährleisten, daß die Bodentiere 19 einerseits ausreichend mit Frischkompost versorgt werden und andererseits nicht in den Bereich des Endes 5 gelangen, an dem mittels der Abführvorrichtung 21 der veredelte Kompost abgeführt wird. Durch die besonders gute Durchlüftung der Miete 48 wird die Tätigkeit der Bodentiere 19 angeregt und gesteigert. Der intensive biologisch hochaktive Prozeß fördert die Veredelung und verkürzt die Verweildauer des Komposts in der Kompostierungsanlage 1. Wie bereits oben angedeutet, ist es aber auch möglich, die erste Förderstrecke mit den Fördermitteln 41 isoliert zu betreiben, ohne daß eine Veredelung des Frischkomposts durch Bodentiere erfolgt. Für die Durchmischung des Materials ergeben sich eine Vielzahl von Möglichkeiten der Steuerung der Förderschnecken 41. Beispielsweise kann an einer im hinteren Bereich der Förderstrecke liegenden Meßstelle die Qualität des Komposts überprüft und je nach dem die Fördergeschwindigkeit der Fördermittel 41 vergrößert oder abgesenkt werden.

In den Fig. 10 und 11 ist eine weitere Ausführungsform der Kompostierungsanlage 1 dargestellt, die in wesentlichen Teilen der mit Bezug auf die Fig. 8 und 9 beschriebenen Kompostierungsanlage 1 entspricht. Im Gegensatz zu den Fig. 8 und 9 sind als Fördermittel jedoch nicht Förderschnecken, sondern Schubstangen-Klappkratzer 44 vorgesehen. Die Schubstangen-Klappkratzer 44 weisen die Mieten 47, 48 in Längsrichtung durchsetzende Träger 45 auf, an denen beidseitig in regelmäßigen Abständen um vertikale Achsen schwenkbare Kratzarme 46 angeordnet sind. Die Träger 45 sind auf Führungsrollen gelagert, und sie werden durch doppelt wirkende Hubzylinder (nicht dargestellt) intermittierend bewegt. Beim Vorschub in Richtung des Pfeils 42 auf der ersten Förderstrecke bzw. des Pfeils 43 auf der zweiten Förderstrecke stehen die Kratzarme 46 etwa senkrecht zu ihrem Träger 45, so daß sich das zu fördernde Gut vor dem jeweiligen Kratzarm 46 staut und mit diesem mitgenommen wird. In dieser senkrechten Stellung liegen die Kratzarme 46 an einem Anschlag des jeweiligen Trägers 45 an. Bei einer Bewegung in entgegengesetzter Richtung können die Kratzarme 46 dem zu fördernden Gut ausweichen und von dem Anschlag an dem Träger 45 weg schwenken. In dieser eingeklappten Stellung können die Träger 45 ungehindert durch das Fördergut gleiten. Mittels dieser intermittierenden Schubweise wird das Fördergut schubweise weiterbewegt. Durch unterschiedliche zeitliche Beaufschlagungen der den einzelnen Träger 45 zugeordneten Hubzylinder können unterschiedliche Bewegungsrichtungen benachbarter Schubstangen-Klappkratzer 44 erzielt und eine partielle Durchmischung des Komposts innerhalb der Mieten 47, 48 bewirkt werden. Mittels geeigneter Regelmechanismen kann die Hub- und Fördergeschwindigkeit und somit der Durchmischungsgrad des Komposts in gewünschter Weise geregelt werden. Die intensive Durchmischung und Durchlüftung der Miete 47 regt die mikrobiologische Tätigkeit an und verkürzt somit die Rottezeit, wodurch sich der Durchsatz der Kompostierungsanlage 1 erhöht. Es ist auch möglich, anstatt der Schubstangen-Klappkratzer 44 beispielsweise Kratzbodenketten, Schuppenbänder o. dgl. zu verwenden. Wichtig ist, daß letztendlich eine steur- oder regelbare Relativbewegung des Komposts auf der jeweiligen Förderstrecke erfolgt.

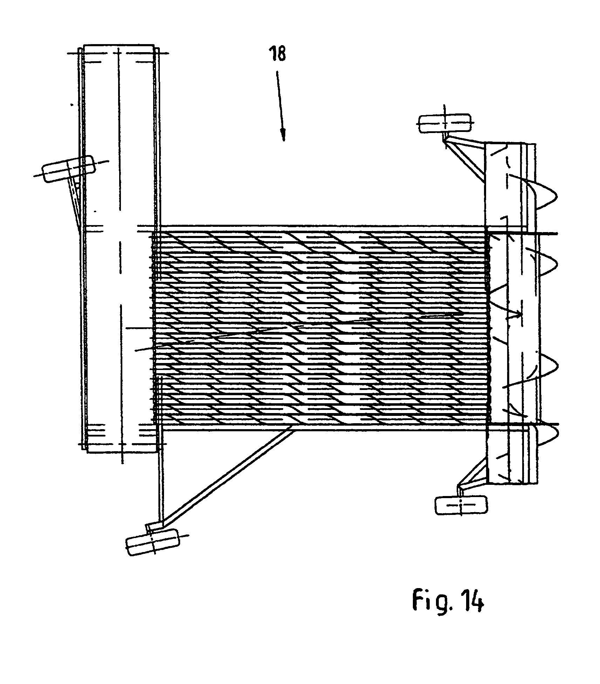

Die Figuren 13 und 14 zeigen zwei unterschiedliche Ansichten der Wendelwellensiebmaschine 18. Anstelle der Wendelwellensiebmaschine 18 kann jedoch auch eine andere Siebmaschine, beispielsweise eine Flächenschüttelsieb- oder Rundsiebmaschine eingesetzt werden.

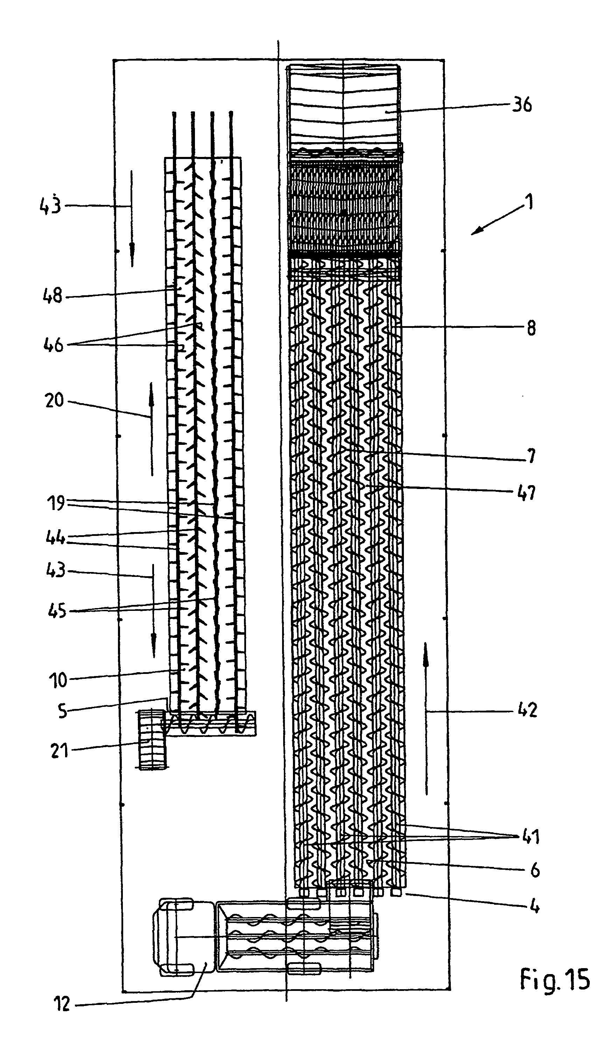

Schließlich zeigen die Figuren 15 und 16 zwei Ansichten einer weiteren Ausführungsform der Vorrichtung zum Aufbereiten von Frischkompost. Die erste Förderstrecke weist dabei die aus Fig. 8 bekannten Förderschnecken 41 auf, die u. a. für eine gründliche Durchmischung der Miete 47 in dem Heißrottebereich 7 sorgen. Am Ende dieser Förderstrecke ist die Überladevorrichtung 36 so verschwenkt, daß hier direkt Kompost abgezogen werden kann, ohne daß dieser einer weiteren Veredelung auf der zweiten Förderstrecke zugeführt wird. Die zweite Förderstrecke hingegen weist die aus Fig. 10 bekannten Schubstangen-Klappkratzer 44 auf. Die Schubstangen-Klappkratzer 44 haben den Vorteil, daß sie besonders schonend für die in dem Veredelungsbereich 9 enthaltenen Bodentiere 19 sind.

### BEZUGSZEICHENLISTE

- 1 -: Kompostierungsanlage
- 2 -: Schiene
- 3 -: Wandermiete
- 4 -: Ende
- 5 -: Ende
- 6 -: Aufhaldungsbereich
- 7 -: Heißrottebereich
- 8 -: Nachrottebereich
- 9 -: Veredelungsbereich
- 10 -: Abführbereich

- 21 -: Abführvorrichtung
- 22 -: Pfeil
- 23 -: Meßstelle
- 24 -: Meßstelle
- 25 -: Halle
- 26 -: Abluftöffnung
- 27 -: Bodenplatte
- 28 -: Schlitzöffnung
- 29 -: Sickerwasserrinne
- 30 -: Durchfallöffnung

- 41 -: Förderschnecke
- 42 -: Pfeil
- 43 -: Pfeil
- 44 -: Schubstangen-Klappkratzer
- 45 -: Träger
- 46 -: Kratzarm
- 47 -: Miete
- 48 -: Miete

- 11 -: Pfeil
- 12 -: Häckslervorrichtung
- 13 -: Pfeil
- 14 -: Mobilhalle
- 15 -: Kanal
- 16 -: Doppelpfeil
- 17 -: Mietenumsetzvorrichtung
- 18 -: Wendelwellensiebmaschine
- 19 -: Bodentiere
- 20 -: Pfeil

- 31 -: Förderrinne
- 32 -: Förderschnecke
- 33 -: Plattform
- 34 -: Rolle
- 35 -: Durchladeöffnung
- 36 -: Überladevorrichtung
- 37 -: Förderband
- 38 -: Förderband
- 39 -: Pfeil
- 40 -: Pfeil

## Patentansprüche

1. Verfahren zum Aufbereiten von Frischkompost, mit den Schritten:
Zuführen von Bodentieren (19) in zumindest einen ersten Teilbereich des Frischkomposts,
zumindest teilweises Veredeln des Frischkomposts durch die Bodentiere (19) in einem Veredelungsbereich (9), und
Bereitstellen eines zweiten Teilbereichs des Frischkomposts oder zusätzlichen Frischkomposts, der noch nicht von den Bodentieren (19) durchsetzt ist, woraus die Bewegungsrichtung der Bodentiere (19) in Richtung dieses zweiten Teilbereichs des Frischkomposts und/oder des zusätzlichen Frischkomposts resultiert,
wobei der Frischkompost in der Form eines endlosen Strangs so bereitgestellt wird, dass sich der Veredelungsbereich (9) in der Bewegungsrichtung der Bodentiere (19) auf eine Erstreckung von mehr als zwei Metern ausdehnen und diese Erstreckung beibehalten kann.

2. Verfahren nach Anspruch 1, **dadurch gekennzeichnet, dass** der Frischkompost so bereitgestellt wird, dass die Bewegungsrichtung der Bodentiere (19) horizontal ist.

3. Verfahren nach Anspruch 1 oder 2, **dadurch gekennzeichnet, dass** die Position der Bodentiere (19) in dem Frischkompost bestimmt und je nach Position der Bodentiere (19) die Bereitstellungsgeschwindigkeit des Frischkomposts verändert wird.

4. Verfahren nach einem der Ansprüche 1 bis 3, **dadurch gekennzeichnet, dass** es sich bei den Bodentieren (19) um Würmer, Regenwürmer, Springschwänze oder Asseln handelt.

5. Verfahren nach einem der Ansprüche 1 bis 4, **dadurch gekennzeichnet, dass** der Frischkompost an einem Ende (4) einer Wandermiete (3) bereitgestellt wird, die in der Form mindestens einer Kreisbahn oder mindestens einer ovalen Bahn aufgebaut ist, und dass der veredelte Kompost an dem anderen Ende (5) abgeführt wird.

6. Verfahren nach Anspruch 5, **dadurch gekennzeichnet, dass** in der Wandermiete (3) ein Heißrottebereich (7) und der Veredelungsbereich (9) nacheinander entgegen der Bewegungsrichtung der Bodentiere (19) angeordnet sind.

7. Verfahren nach einem der Ansprüche 1 bis 4, **dadurch gekennzeichnet, dass** der Frischkompost entgegen der Bewegungsrichtung der Bodentiere (19) in einer horizontalen Richtung gefördert wird, wobei der Betrag der Fördergeschwindigkeit des Frischkomposts dem Betrag der mittleren Fortbewegungsgeschwindigkeit der Bodentiere (19) in dem Frischkompost entspricht.

8. Vorrichtung zum Aufbereiten von Frischkompost nach dem Verfahren gemäß einem oder mehreren der Ansprüche 1 bis 7, **dadurch gekennzeichnet, dass** zwei nebeneinander liegende Förderstrecken mit Fördermitteln vorgesehen sind, wobei die Förderstrecken entgegengesetzte Förderrichtungen aufweisen und mittels einer Querfördereinrichtung miteinander verbunden sind, wobei auf der ersten Förderstrecke der Heißrottebereich (7) und auf der zweiten Förderstrecke der Veredelungsbereich (9) angeordnet ist.

9. Vorrichtung nach Anspruch 8, **dadurch gekennzeichnet, dass** das mindestens eine Fördermittel den Frischkompost so bereitgestellt, dass die Bewegungsrichtung der Bodentiere (19) horizontal ist.

10. Vorrichtung nach Anspruch 9, **dadurch gekennzeichnet, dass** die Fördermittel eine Mehrzahl von Förderschnecken (41), Schubstangen-Klappkratzern (44), Kratzbodenketten und/oder Schuppenbändem aufweisen.

11. Vorrichtung nach einem der Ansprüche 8 bis 10, **dadurch gekennzeichnet, dass** eine Vorrichtung zum Bestimmen der Position der Bodentiere (19) in dem Frischkompost vorgesehen ist.

12. Vorrichtung nach Anspruch 11, **dadurch gekennzeichnet, dass** die Vorrichtung zum Bestimmen der Position der Bodentiere (19) in dem Frischkompost mindestens zwei in Bewegungsrichtung der Bodentiere (19) beabstandet angeordnete Messstellen (23, 24) aufweist.

13. Vorrichtung nach Anspruch einem der Ansprüche 8 bis 12, **dadurch gekennzeichnet, dass** die Querfördereinrichtung als Überladevorrichtung (36) ausgebildet und am Ende der ersten Förderstrecke derart verschwenkbar angeordnet ist, dass dort Frischkompost direkt abgezogen werden kann.

## Claims

1. A method of treating fresh compost, comprising the steps of:
supplying ground animals (19) in at least a first portion of the fresh compost,
at least partly grafting the fresh compost by the ground animals (19) in a graft portion (9), and
providing a second portion of the fresh compost or additional fresh compost through which the ground animals (19) have not yet moved, the moving direction of the ground animals (19) towards this second portion of the fresh compost and/or the additional fresh compost resulting therefrom,
the fresh compost being provided in the form of an endless elongated element such that the graft portion (9) in the moving direction of the ground animals (19) may extend to reach an extension of more than two meters, and that it may maintain this extension.

2. The method of claim 1, **characterised in that** the fresh compost is provided in a way that the moving direction of the ground animals (19) is horizontal.

3. The method of claim 1 or 2, **characterised in that** the position of the ground animals (19) in the fresh compost is determined, and that the providing velocity of the fresh compost is varied depending on the position of the ground animals (19).

4. The method of at least one of claims 1 to 3, **characterised in that** the ground animals (19) are worms, earthworms, collembolas or woodlouses.

5. The method of at least one of claims 1 to 4, **characterised in that** the fresh compost is provided at one end (4) of a moving stack (3), the moving stack (3) being built up in the form of at least one circular path or at least one oval path, and that the grafted compost is removed at the other end (5).

6. The method of claim 5, **characterised in that** the moving stack (3) includes a hot rotting portion (7) and a graft portion (9) which are located one after the other in a direction opposite the moving direction of the ground animals (19).

7. The method of at least one of claims 1 to 4, **characterised in that** the fresh compost is conveyed against the moving direction of the ground animals (19) in a horizontal direction, the value of the conveying velocity of the fresh compost corresponding to the value of the average moving velocity of the ground animals (19) in the fresh compost.

8. An apparatus for treatment of fresh compost according to the method of one or more of claims 1 to 7, **characterised in that** it includes two adjacent conveying paths including conveying means, the conveying paths having opposite conveying directions and being interconnected by a transverse conveying unit, the hot rotting portion (7) being arranged on the first conveying path and the graft portion (9) being located on the second conveying path.

9. The apparatus of claim 8, **characterised in that** the at least one conveying means provides the fresh compost in a way that the moving direction of the ground animals (19) is horizontal.

10. The apparatus of claim 9, **characterised in that** the conveying means include a plurality of conveying helixes (41), connecting rod folding scratch devices (44), scratching ground chains and/or scale bands.

11. The apparatus of at least one of claims 8 to 10, **characterised in that** it includes an apparatus for determining the position of the ground animals (19) in the fresh compost.

12. The apparatus of claim 11, **characterised in that** the apparatus for determining the position of ground animals (19) in the fresh compost includes at least two measuring points (23, 24) being spaced apart in the moving direction of the ground animals (19).

13. The apparatus of at least one of claims 8 to 12, **characterised in that** the transverse conveying apparatus is designed as a transfer apparatus (36) which is pivotally arranged at the end of the first conveying path such that it is possible to directly remove fresh compost at this place.

## Revendications

1. Procédé de production d'un compost frais, comportant les étapes suivantes :
amenée d'animaux du sol (19) dans au moins une première zone partielle du compost frais,
enrichissement au moins partiel du compost frais par les animaux du sol (19) dans une zone d'enrichissement (9), et
préparation d'une deuxième zone partielle du compost frais ou compost frais supplémentaire qui n'est pas encore traversée par les animaux du sol (19), d'où il résulte le sens de déplacement des animaux du sol (19) en direction de cette deuxième zone partielle du compost frais et/ou du compost frais supplémentaire,
le compost frais sous la forme d'un boudin sans fin étant préparé de manière que la zone d'enrichissement (9) puisse s'étendre dans le sens de déplacement des animaux du sol (19) sur une étendue de plus de deux mètres et puisse conserver cette étendue.

2. Procédé selon la revendication, **caractérisé en ce que** le compost frais est préparé de manière que la direction de déplacement des animaux du sol (19) soit horizontale.

3. Procédé selon la revendication 1 ou 2, **caractérisé en ce que** la position des animaux du sol (19) dans le compost frais est déterminée et, suivant la position des animaux du sol (19), la vitesse de préparation du compost frais est modifiée.

4. Procédé selon l'une des revendications 1 à 3, **caractérisé en ce que** des animaux du sol (19) sont des vers, vers de terre, collemboles ou des cloportes.

5. Procédé selon l'une des revendications 1 à 4, **caractérisé en ce que** le compost frais est préparé à une extrémité (4) d'un silo déplaçable (3) qui est construit sous la forme d'au moins une trajectoire circulaire ou d'au moins une trajectoire ovale et **en ce que** le compost enrichi est évacué à l'autre extrémité (5).

6. Procédé selon la revendication 5, **caractérisé en ce que** dans le silo déplaçable (3) sont disposées successivement, dans le sens opposé au sens de déplacement des animaux du sol, une zone de pourrissage à chaud (7) et la zone d'enrichissement (9).

7. Procédé selon l'une des revendications 1 à 4, **caractérisé en ce que** le compost frais est transporté, dans le sens contraire au sens de déplacement des animaux du sol (19), dans une direction horizontale, la valeur absolue de la vitesse de transport du compost frais correspondant à la valeur absolue de la vitesse moyenne de progression des animaux du sol (19) dans le compost frais.

8. Dispositif de traitement de compost frais selon le procédé suivant une ou plusieurs des revendications 1 à 7, **caractérisé en ce que** sont prévues deux lignes de transport juxtaposées avec des moyens de transport, les lignes de transport présentant des sens de transport opposés et étant reliées entre elles au moyen d'un dispositif de transport transversal, sur la première ligne de transport étant disposée la zone de pourrissage à chaud (7) et sur la deuxième ligne de transport, la zone d'enrichissement (9).

9. Dispositif selon la revendication 8, **caractérisé en ce que** le ou les moyens de transport préparent le compost frais de manière que la direction de déplacement des animaux du sol (19) soit horizontale.

10. Dispositif selon la revendication 9, **caractérisé en ce que** les moyens de transport comportent une pluralité de vis sans fin de transport (41), de racloirs basculants à pousseur (44), de chaînes de raclage du sol et/ou de convoyeurs à lamelles.

11. Dispositif selon l'une des revendications 8 à 10, **caractérisé en ce qu'**il est prévu un dispositif pour déterminer la position des animaux du sol (19) dans le compost frais.

12. Dispositif selon la revendication 11, **caractérisé en ce que** le dispositif pour déterminer la position des animaux du sol (19) dans le compost frais comporte au moins deux points de mesure (23, 24) disposés à distance dans la direction de déplacement des animaux du sol (19).

13. Dispositif selon l'une des revendications 8 à 12, **caractérisé en ce que** le dispositif de transport transversal est réalisé comme dispositif de transbordement (36) et est disposé pivotant à l'extrémité de la première ligne de transport de manière que du compost frais puisse y être directement extrait.
